# FASCICULE DE BREVET EUROPEEN

(11) **EP 1 239 421 B1**
(45) Date de publication et mention de la délivrance du brevet: **15.10.2008**
(21) Numéro de dépôt: 01200876.9
(22) Date de dépôt: 08.03.2001
(51) Int. Cl.: G07C 9/00, G07B 15/02, G06K 19/07, G06K 7/00

(54) **Système de détection de passage d'individus ou d'objets par une entrée-sortie à un espace délimité**
System zum Erfassen des Passierens von Personen oder Gegenständen durch einen räumlich begrenzten Eingang-Ausgang
Passage detection system for individuals or objects through an entrance-exit with a limited space

(43) Date de publication de la demande: 11.09.2002
(73) Titulaire: EM Microelectronic-Marin SA, 2074 Marin (CH)
(72) Inventeur: Degrauwe, Marc, 2025 Chez-le-Bart (CH); Roz, Thierry, 2515 Prêles (CH); Desjeux, Olivier, 2525 Le Landeron (CH)
(74) Mandataire: Surmely, Gérard

(56) Documents cités:
- WO-A-00/67208
- WO-A-01/03057
- WO-A-92/08148
- GB-A- 2 246 896
- US-A- 4 459 474
- US-A- 6 097 301

## Description

L'invention concerne la détection d'individus ou d'objets équipés d'unités électroniques portables, ou tickets électroniques, comprenant notamment des moyens de réception de signaux électromagnétiques, ces individus ou objets étant susceptibles d'entrer ou sortir d'un espace délimité par l'intermédiaire d'au moins une entrée-sortie.

Le système comporte notamment un dispositif de détection associé à cet espace délimité et comprenant notamment des moyens d'émission de signaux électromagnétiques.

Il est connu du document US 4,459,474 un système de détection du passage d'un transpondeur par une entrée-sortie ou dans un couloir. Ce système prévoit deux antennes de réception d'un signal émis par le transpondeur. Ces deux antennes sont distantes l'une de l'autre selon la direction de l'entrée-sortie ou du couloir et sont reliées à un lecteur qui comprend des moyens pour mesurer l'amplitude de chaque signal reçu pour chacune des deux antennes et pour comparer ces amplitudes. Selon le sens de passage du transpondeur, la première antenne ou la seconde antenne reçoit en premier un signal avec une amplitude supérieure à l'amplitude du signal reçu par l'autre antenne, ce qui permet de détecter le sens de passage du transpondeur.

La présente invention concerne plus particulièrement un système de détection de passage dont les moyens d'émission du dispositif de détection associé à l'espace délimité sont agencés pour émettre des premier et deuxième signaux électromagnétiques différents dans respectivement des première et deuxième régions de communication séparées spatialement l'une de l'autre et se recouvrant partiellement, ces première et deuxième régions traversant chacune une zone d'entrée-sortie définie par l'entrée-sortie à l'espace délimité.

Un système de détection d'individus ou d'objets présentant les caractéristiques susmentionnées est notamment exposé dans la demande internationale WO 01/03057 également au nom de la Demanderesse. On pourra également se référer à la demande de brevet européen No. 00204758.8 du 29.12.2000 intitulée "Système de détection du passage d'un individu ou objet par une entrée-sortie à un espace délimité" également au nom de la Demanderesse.

L'utilisation de deux champs électromagnétiques partiellement superposés permet avantageusement la détection du sens de passage, au travers de l'entrée-sortie, d'un individu ou d'un objet équipé d'une unité électronique portable. A cet effet, on prévoit, dans le cadre de la présente invention, des moyens de détection de sens de passage permettant de détecter le sens de passage d'un individu ou d'un objet en fonction de la réception, par l'unité électronique, des premier et deuxième signaux électromagnétiques émis respectivement dans les première et deuxième régions de communication.

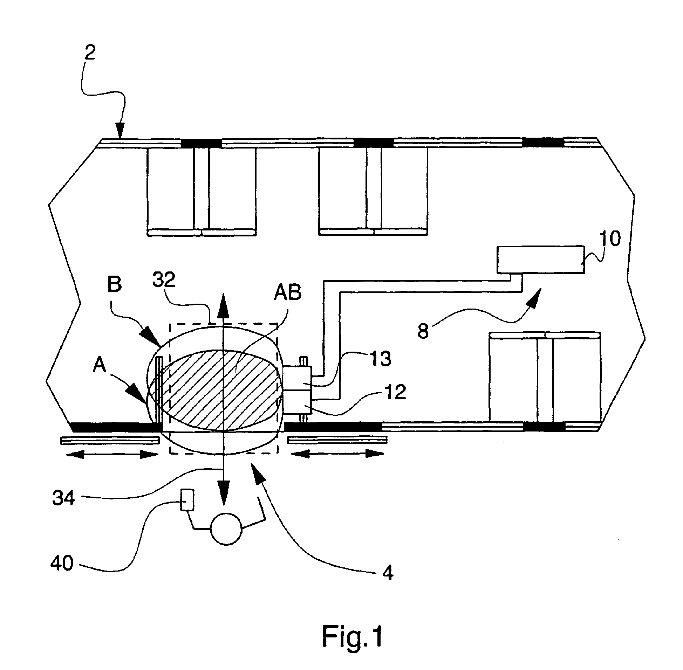

La figure 1 illustre schématiquement un exemple de mise en oeuvre d'un système de détection susmentionné. Des individus ou objets sont susceptibles d'entrer ou sortir d'un espace délimité 2 (par exemple un moyen de transport public tel qu'un wagon de voyageurs ou un autobus) au travers d'au moins une entrée-sortie, indiquée par la référence 4. Comme déjà mentionné, un dispositif de détection est associé à l'espace délimité 2 et comprend notamment des moyens d'émission 8. Ces moyens d'émission 8 comprennent un circuit électronique 10 relié à une paire d'antenne 12, 13 agencées à l'entrée-sortie 4. Les antennes 12, 13 émettent respectivement, préférablement à relativement basse fréquence (de l'ordre d'une centaine de kHz), un premier et un deuxième signal électromagnétique, désignés « a » et « b » dans la suite de la présente description, dans respectivement des première et deuxième régions de communication A, B représentées schématiquement dans la figure 1. Ces régions de communication A, B traversent une zone d'entrée-sortie 32 à l'espace délimité 2 définie par l'entrée-sortie 4.

Les régions de communication A et B sont au moins partiellement séparées l'une de l'autre et possèdent une zone commune ou zone de recouvrement indiquée par la zone hachurée AB. En pratique, cette zone de recouvrement AB peut être importante en terme de surface et, en particulier, être plus importante que les parties non superposées des deux régions de communication A, B. Lorsqu'un individu ou un objet équipé d'une unité électronique portable, désignée 40 dans la figure 1, traverse l'entrée-sortie 4, comme illustré schématiquement par la flèche 34, ou passe dans la zone 32, celui-ci pénètre ainsi successivement dans l'une et/ou l'autre des régions de communication A, B. L'unité électronique portable 40 dont est équipé chaque individu ou objet capte ainsi une succession des premier et deuxième signaux électromagnétiques « a », « b » émis par les antennes 12, 13. L'ordre et la succession des signaux électromagnétiques reçus par l'unité électronique portable 40 permet d'identifier le sens de passage de l'individu ou de l'objet au travers de l'entrée-sortie 4.

La robustesse de cette détection de sens de passage est fortement tributaire de l'étendue de la zone de recouvrement AB entre les deux régions de communication A, B. A l'intérieur de cette zone de recouvrement AB, l'unité électronique 40 reçoit à la fois le premier signal électromagnétique « a » et le deuxième signal électromagnétique « b » émis respectivement par les antennes 12 et 13. La détermination du sens de passage de l'unité électronique 40 dans la zone de recouvrement AB ne peut donc être réalisée en se basant uniquement sur l'identification des signaux électromagnétiques reçus. Compte tenu de l'agencement spatial réel des régions de communication A, B et/ou de la vitesse de déplacement de l'unité électronique portable 40 au travers de l'entrée-sortie 4, il existe une relativement grande probabilité que l'unité électronique portable se trouve directement ou trop rapidement dans la zone de recouvrement AB, de sorte que le sens de passage effectif de l'unité électronique portable 40 peut ne pas être détecté correctement.

Un but de la présente invention est donc d'améliorer la robustesse de la détection du sens de passage du système susmentionné et en particulier permettre une détection fiable de ce sens de passage, quand bien même l'unité électronique portable pénètre rapidement dans la zone de recouvrement de deux régions de communication.

A cet effet, la présente invention a pour objet un système de détection du passage d'individus ou d'objets dont les caractéristiques sont énoncées dans la revendication indépendante 1.

La présente invention a également pour objet une unité électronique portable dont les caractéristiques sont énoncées dans la revendication indépendante 5.

Des modes de réalisation avantageux de la présente invention font l'objet des revendications dépendantes.

Selon l'invention, chaque unité électronique portable est ainsi équipée de moyens de mesure d'amplitude permettant de déterminer l'amplitude des signaux électromagnétiques reçus par cette unité électronique portable. Chaque unité électronique portable comprend en outre des moyens de comparaison permettant de comparer l'amplitude du premier signal électromagnétique émis dans la première région de communication avec l'amplitude du deuxième signal électromagnétique émis dans la deuxième région de communication afin de déterminer lequel de ces signaux électromagnétiques présente la plus grande amplitude.

De la sorte, chaque unité électronique portable est susceptible de dériver une information supplémentaire, à savoir l'amplitude des signaux reçus, lui permettant de détecter le sens effectif de passage de cette unité au travers de l'entrée-sortie. Les signaux transmis dans la zone de recouvrement peuvent ainsi effectivement être utilisés pour déterminer ce sens de passage.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1, déjà présentée, est une illustration schématique d'un système de détection du sens de passage faisant l'objet de la présente invention;
- la figure 2 montre une première variante de réalisation d'une unité électronique portable selon l'invention ;
- la figure 3 illustre un premier mode d'émission des premier et deuxième signaux électromagnétiques ;
- la figure 4 montre une seconde variante de réalisation d'une unité électronique portable selon l'invention, et
- la figure 5 illustre un deuxième mode d'émission des premier et deuxième signaux électromagnétiques.

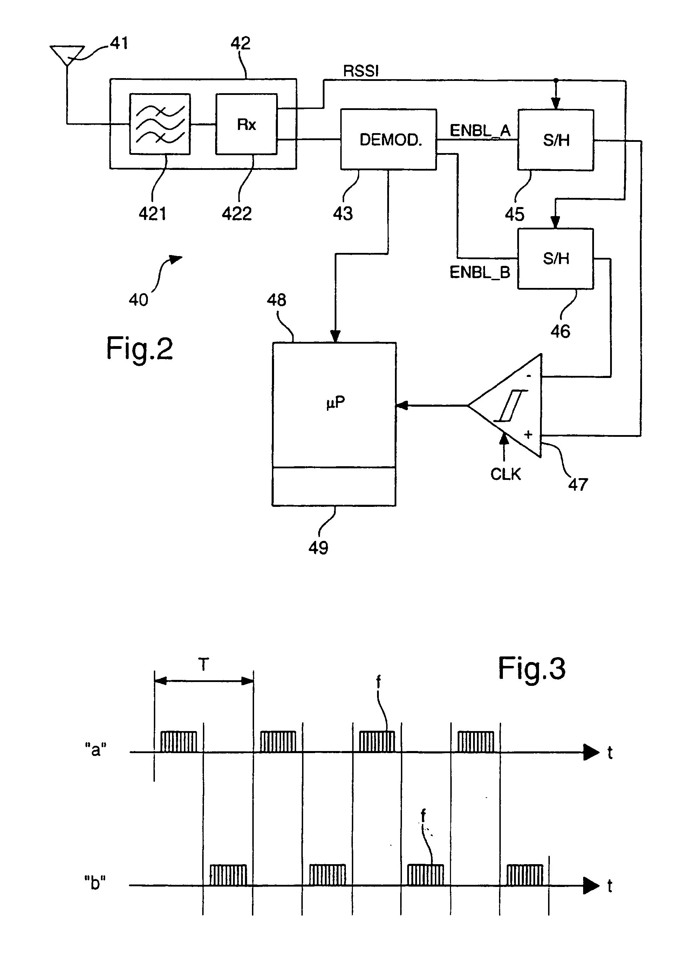

La figure 2 montre une première variante de réalisation d'une unité électronique portable selon la présente invention. Selon cette première variante, les premier et deuxième signaux électromagnétiques « a » et « b » sont émis à une même fréquence par les antennes 12, 13 et sont multiplexés dans le temps, c'est-à-dire émis en alternance, périodiquement, comme illustré schématiquement à la figure 3. Dans ce cas, les premier et deuxième signaux électromagnétiques « a » et « b » sont différenciés par l'information qu'ils portent.

Comme illustré dans la figure 2, chaque unité électronique portable comprend un canal de réception unique pour la réception des premier et deuxième signaux électromagnétiques « a » et « b ». Cette unité électronique 40 comprend ainsi une antenne 41 reliée à des moyens de réception 42 comprenant notamment l'agencement série d'un filtre passe-bande 421 accordé à la fréquence d'émission des premier et deuxième signaux électromagnétiques et d'un circuit récepteur 422 délivrant à sa sortie un signal de réception porteur de l'information transmise. Ce signal de réception est délivré à des moyens de décodage, ou démodulateur, 43 destinés à extraire l'information utile, notamment l'information identifiant le signal électromagnétique reçu, à savoir un identifiant du premier « a » ou du deuxième signal électromagnétique « b ». L'information décodée est transmise à une unité centrale de traitement 48, comprenant un microprocesseur ou microcontrôleur, associée à une mémoire 49. Le circuit récepteur 422 délivre par ailleurs typiquement un signal indicateur de l'amplitude de réception du signal reçu, indiqué dans la figure par la référence RSSI ("Received Signal Strength Indication").

L'unité électronique portable 40 comporte en outre deux circuits échantillonneurs ou circuits « sample-and-hold », indiqués respectivement par les références 45 et 46, destinés chacun à échantillonner le signal de réception et fournir une mesure d'amplitude de ce signal de réception. Ces circuits échantillonneurs 45, 46 sont destinés respectivement à fournir une mesure d'amplitude des premier et deuxième signaux reçus en alternance par l'unité électronique 40 et reçoivent en conséquence le signal indicateur d'amplitude RSSI délivré en sortie du circuit récepteur 422.

Les circuits échantillonneurs 45, 46 sont activés respectivement par des signaux logiques de commande ENBL_A et ENBL_B délivrés en sortie des moyens de décodage 43. Ces signaux de commande ENBL_A et ENBL_B sont représentatifs du type de signal reçu, à savoir le premier signal « a » ou le deuxième signal « b », et sont dérivés de l'identifiant contenu dans ce signal. En particulier, et par convention, on admettra que le signal de commande ENBL_A prend l'état logique « haut » lorsque le premier signal électromagnétique « a » est reçu par l'unité électronique 40, et l'état logique « bas » dans le cas contraire. A l'inverse, le signal de commande ENBL_B prend l'état logique « haut » lors de la réception du deuxième signal électromagnétique « b » et l'état logique « bas » dans le cas contraire.

Outre le fait que les circuits échantillonneurs 45, 46 permettent respectivement une mesure de l'amplitude de réception des premier et deuxième signaux électromagnétiques « a », « b », chaque circuit échantillonneur est agencé pour conserver cette mesure d'amplitude durant une période suffisante pour permettre une comparaison avec la mesure d'amplitude produite par l'autre circuit échantillonneur.

Chaque circuit échantillonneur 45, 46 délivre un signal représentatif de l'amplitude de réception mesurée à un circuit comparateur 47 qui fournit en sortie un signal indiquant lequel des signaux « a » et « b » reçus possède l'amplitude la plus importante. Ce circuit comparateur 47 est cadencé par un signal d'horloge adéquat CLK de manière à effectuer une comparaison périodique des mesures d'amplitude des premier et deuxième signaux électromagnétiques. Ce signal d'horloge CLK est préférablement dérivé, de manière connue, de la fréquence du signal électromagnétique reçu.

Le signal d'horloge CLK pourra par exemple avoir une période sensiblement égale à la moitié de la période de répétition des premier et deuxième signaux électromagnétiques, indiquée T dans la figure 3, auquel cas les circuits échantillonneurs 45, 46 sont agencés pour conserver leur mesure d'amplitude durant une période sensiblement égale à la période du signal d'horloge CLK.

Le signal produit en sortie du circuit comparateur 47 est délivré à l'unité centrale de traitement 48 en vue de la détermination du sens de passage de l'unité électronique portable 40. Dans la zone de recouvrement AB, on aura donc compris que seul le premier ou le deuxième signal électromagnétique est considéré dans l'optique de déterminer la direction de passage de l'unité électronique portable 40. La zone de recouvrement est essentiellement partagée en deux parties distinctes associées respectivement aux première et deuxième régions de communication A, B. Les régions où seul le premier ou le deuxième signal électromagnétique est reçu sont ainsi en quelque sorte étendues par les moyens électroniques des unités 40.

Il en résulte que la détection d'une séquence de réception des signaux « a » et « b » permettra d'identifier avec une grande sécurité et robustesse quel signal parmi ces deux signaux a été reçu en premier et en dernier. Selon l'invention, en répartissant la zone de recouvrement AB par une mesure et une comparaison des amplitudes de réception des premier et deuxième signaux électromagnétiques, on améliore ainsi les possibilités de détection du sens de passage d'une unité portable associée au système selon l'invention.

Pour la réalisation du circuit comparateur 47, on fera avantageusement appel à un circuit comparateur à hystérèse bien connu de l'homme du métier, afin d'assurer une tolérance au bruit et éviter une instabilité du signal de sortie du comparateur 47 lorsque l'unité électronique portable se trouve dans une région où les amplitudes de réception des premier et deuxième signaux électromagnétiques sont sensiblement équivalentes.

On notera que cette variante de réalisation et son exploitation est donnée à titre d'exemple nullement limitatif.

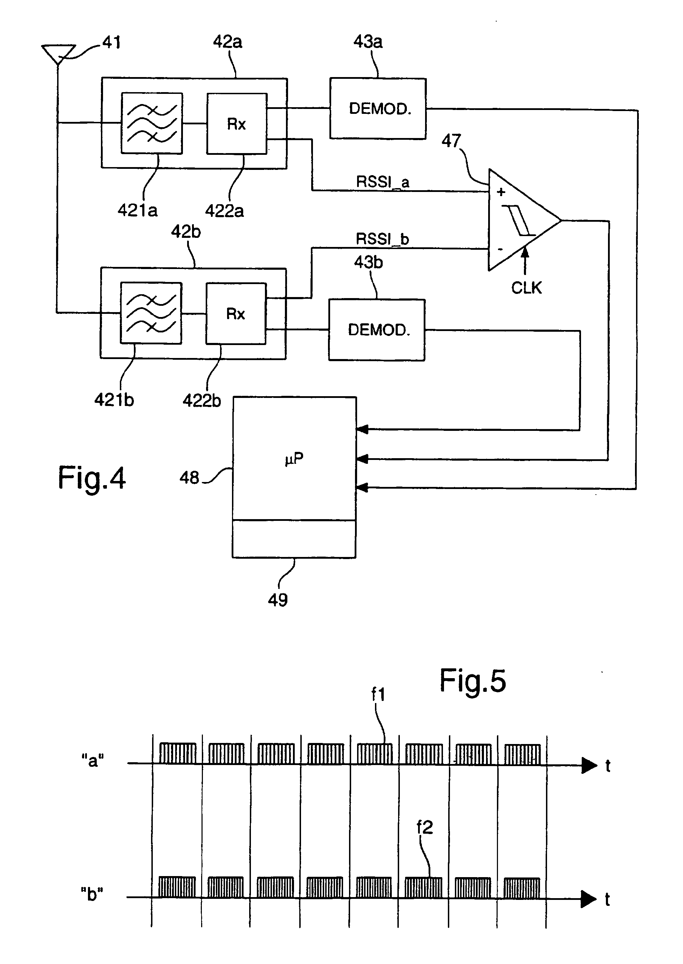

La figure 4 montre une deuxième variante de réalisation d'une unité électronique portable selon la présente invention. Selon cette deuxième variante, les premier et deuxième signaux électromagnétiques « a » et « b » sont émis à des fréquences différentes (f1, f2) par les antennes 12, 13, comme illustré schématiquement dans la figure 5. Contrairement à la première variante de réalisation, ces signaux ne sont ainsi plus multiplexés dans le temps. Dans ce cas, les premier et deuxième signaux électromagnétiques « a » et « b » sont donc différenciés par leur fréquence d'émission. Ce mode d'émission permet de supprimer les temps morts entre deux répétitions successives et donc de transmettre une quantité d'information plus importante, à fréquence comparable, par rapport au mode d'émission précédant faisant appel à un multiplexage temporel. Cette solution nécessite toutefois l'utilisation de deux canaux de réception distincts, l'un pour le premier signal électromagnétique « a » et l'autre pour le deuxième signal électromagnétique « b ».

Comme illustré dans la figure 4, chaque unité électronique portable comprend donc, dans ce cas, des premier et deuxième canaux de réception pour la réception des premier et deuxième signaux électromagnétiques « a » et « b », respectivement. L'unité électronique 40 comprend une antenne 41, comme précédemment, reliée à des premiers et deuxièmes moyens de réception 42a et 42b comprenant chacun l'agencement série d'un filtre passe-bande 421 a, respectivement 421 b, accordé à la fréquence d'émission du premier signal électromagnétique « a », respectivement du deuxième signal électromagnétique « b », et d'un circuit récepteur 422a, respectivement 422b, délivrant à sa sortie un signal de réception porteur de l'information transmise.

De préférence, chaque circuit récepteur 422a, 442b est connecté à des moyens de décodage respectifs, indiqués par les références 43a et 43b destinés, comme précédemment à extraire l'information utile des signaux électromagnétiques « a » et « b ». L'information décodée pour chaque signal est transmise à une unité centrale de traitement 48 associée à une mémoire 49.

Les circuits récepteurs 422a et 422b délivrent chacun un signal indicateur d'amplitude RSSI_a et RSSI_b qui est appliqué à l'entrée d'un circuit comparateur 47 préférablement cadencé par un signal d'horloge CLK. Ce circuit comparateur 47 fournit en sortie, comme précédemment, un signal identifiant lequel des signaux « a » et « b » reçus possède l'amplitude la plus importante. Ce signal est délivré à l'unité central de traitement 48 en vue de la détermination du sens de passage de l'unité électronique portable 40. A nouveau, dans la zone de recouvrement AB, seul le premier ou le deuxième signal électromagnétique est donc considéré dans l'optique d'établir la direction de passage de l'unité électronique portable 40.

On comprendra que diverses modifications et/ou améliorations évidentes pour l'homme du métier peuvent être apportées aux divers modes de réalisation décrits dans la présente description sans sortir du cadre de l'invention défini par les revendications annexées.

## Revendications

1. Système de détection du passage d'individus ou d'objets par une entrée-sortie (4) à un espace délimité (2) comprenant :
- un dispositif de détection associé au dit espace délimité (2) et comprenant des moyens d'émission (8) pour émettre des premier et deuxième signaux électromagnétiques différents (a, b) dans respectivement des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4) ;
- des unités électroniques portables (40) destinées à équiper lesdits individus ou objets et comprenant des moyens de réception (41, 42 ; 41, 42a, 42b) desdits premier et deuxième signaux électromagnétiques (a, b) émis par lesdits moyens d'émission (8) ; et
- des moyens de détection du sens de passage, au travers de ladite entrée-sortie (4, 5), d'un individu ou d'un objet équipé d'une desdites unités électroniques portables (40) en fonction de la réception desdits premier et deuxième signaux électromagnétiques,
**caractérisé en ce que** chaque unité électronique portable comprend :
- des moyens de mesure d'amplitude permettant de déterminer l'amplitude de réception (RSSI ; RSSI_a, RSSI_b), par cette unité électronique portable, desdits premier et deuxième signaux électromagnétiques (a, b) ; et
- des moyens comparateurs (47) permettant de comparer l'amplitude de réception dudit premier signal électromagnétique (a) avec l'amplitude de réception dudit deuxième signal électromagnétique (b) de manière à déterminer lequel de ces deux signaux présente la plus grande amplitude.

2. Système selon la revendication 1, **caractérisé en ce que** lesdits premier et deuxième signaux électromagnétiques (a, b) sont émis à la même fréquence et sont multiplexés dans le temps, lesdits moyens de mesure d'amplitude comprenant en outre des moyens (45, 46) permettant de conserver la mesure d'amplitude de réception du premier signal électromagnétique (a), respectivement du deuxième signal électromagnétique (b), durant la mesure d'amplitude du deuxième signal électromagnétique (b), respectivement du premier signal électromagnétique (a).

3. Système selon la revendication 1, **caractérisé en ce que** lesdits premier et deuxième signaux électromagnétiques (a, b) sont émis simultanément à des fréquences différentes, chaque unité électronique portable (40) comprenant des premiers moyens de réception (42a) accordés à la fréquence d'émission dudit premier signal électromagnétique (a) et des seconds moyens de réception (42b) accordés à la fréquence d'émission dudit deuxième signal électromagnétique (b).

4. Système selon l'une quelconque des revendications 1 à 3, **caractérisé en ce que** lesdits moyens comparateurs (47) comportent un comparateur à hystérèse.

5. Unité électronique portable, notamment sous la forme d'une carte, destinée à équiper un individu ou un objet et permettre la détection du passage de cet individu ou objet au travers d'une entrée-sortie (4) à un espace délimité (2), cette unité électronique portable comprenant des moyens de réception (41, 42 ; 41, 42a, 42b) de premier et deuxième signaux électromagnétiques (a, b) émis respectivement dans des première et deuxième régions de communication (A, B) séparées spatialement l'une de l'autre et se recouvrant partiellement, ces première et deuxième régions (A, B) traversant chacune une zone d'entrée-sortie (32) définie par ladite entrée-sortie (4),
**caractérisée en ce que** cette unité électronique portable comprend en outre :
- des moyens de mesure d'amplitude permettant de déterminer l'amplitude de réception (RSSI ; RSSI_a, RSSI_b), par cette unité électronique portable, desdits premier et deuxième signaux électromagnétiques (a, b) ; et
- des moyens comparateurs (47) permettant de comparer l'amplitude de réception dudit premier signal électromagnétique (a) avec l'amplitude de réception dudit deuxième signal électromagnétique (b) de manière à déterminer lequel de ces deux signaux présente la plus grande amplitude.

6. Unité électronique selon la revendication 5, **caractérisée en ce que** lesdits premier et deuxième signaux électromagnétiques (a, b) sont émis à la même fréquence et sont multiplexés dans le temps, lesdits moyens de mesure d'amplitude comprenant en outre des moyens (45, 46) permettant de conserver la mesure d'amplitude de réception du premier signal électromagnétique (a), respectivement du deuxième signal électromagnétique (b), durant la mesure d'amplitude du deuxième signal électromagnétique (b), respectivement du premier signal électromagnétique (a).

7. Unité électronique selon la revendication 5, **caractérisé en ce que** lesdits premier et deuxième signaux électromagnétiques (a, b) sont émis simultanément à des fréquences différentes, chaque unité électronique portable (40) comprenant des premiers moyens de réception (42a) accordés à la fréquence d'émission dudit premier signal électromagnétique (a) et des seconds moyens de réception (42b) accordés à la fréquence d'émission dudit deuxième signal électromagnétique (b).

8. Unité électronique selon l'une quelconque des revendications 5 à 7, **caractérisé en ce que** lesdits moyens comparateurs (47) comportent un comparateur à hystérèse.

## Claims

1. System for detecting the passage of persons or objects through an entry-exit (4) to a delimited space (2), including:
- a detection device associated with said delimited space (2) and including transmission means (8) for transmitting different first and second electromagnetic signals (a, b) in respectively first and second communication regions (A, B) spatially separated from each other and partially overlapping, these first and second regions (A, B) each covering an entry-exit zone (32) defined by said entry-exit (4):
- portable electronic units (40) intended to be fitted to said persons or objects and including reception means (41, 42; 41, 42a, 42b) for said first and second electromagnetic signals (a, b) transmitted by said transmission means (8): and
- means for detecting the direction of passage, through said entry-exit (4, 5), of a person or an object fitted with one of said portable electronic units (40) as a function of the reception of said first and second electromagnetic signals,
**characterized in that** each portable electronic unit includes:
- amplitude measuring means for determining the reception amplitude (RSSI; RSSI_a, RSSI_b), by said portable electronic unit, of said first and second electromagnetic signals (a, b); and
- comparator means (47) for comparing the reception amplitude of said first electromagnetic signal (a) with the reception amplitude of said second electromagnetic signal (b) so as to determine which of these two signals has the highest amplitude.

2. System according to claim 1, **characterized in that** said first and second electromagnetic signals (a, b) are transmitted at the same frequency and are multiplexed over time, said amplitude measuring means further including means (45, 46) for holding the reception amplitude measurement of the first electromagnetic signal (a), respectively of the second electromagnetic signal (b), during the amplitude measurement of the second electromagnetic signal (b), respectively of the first electromagnetic signal (a)

3. System according to claim 1, **characterized in that** said first and second electromagnetic signals (a, b) are simultaneously transmitted at different frequencies, each portable electronic unit (40) including first reception means (42a) tuned to the transmission frequency of said first electromagnetic signal (a) and second reception means (42b) tuned to the transmission frequency of said second electromagnetic signal (b).

4. System according to any one of claims 1 to 3, **characterized in that** said comparator means (47) include a hysteresis comparator.

5. Portable electronic unit, particularly in the form of a card, to be fitted to a person or object and to allow detection of the passage of said person or object through an entry-exit (4) to a delimited space (2), said portable electronic unit including means (41, 42; 41, 42a, 42b) for receiving first and second electromagnetic signals (a, b) transmitted respectively in first and second communication regions (A, B) spatially separated from each other and partially overlapping, these first and second regions (A, B) each covering an entry-exit zone (32) defined by said entry-exit (4),
**characterized in that** each portable electronic unit further includes:
- amplitude measuring means for determining the reception amplitude (RSSI; RSSI_a, RSSI_b), by said portable electronic unit, of said first and second electromagnetic signals (a, b); and
- comparator means (47) for comparing the reception amplitude of said first electromagnetic signal (a) with the reception amplitude of said second electromagnetic signal (b) so as to determine which of these two signals has the highest amplitude.

6. Electronic unit according to claim 5, **characterized in that** said first and second electromagnetic signals (a, b) are transmitted at the same frequency and are multiplexed over time, said amplitude measuring means further including means (45, 46) for holding the reception amplitude measurement of the first electromagnetic signal (a), respectively of the second electromagnetic signal (b), during the amplitude measurement of the second electromagnetic signal (b), respectively of the first electromagnetic signal (a).

7. Electronic unit according to claim 5, **characterized in that** said first and second electromagnetic signals (a, b) are simultaneously transmitted at different frequencies, each portable electronic unit (40) including first reception means (42a) tuned to the transmission frequency of said first electromagnetic signal (a) and second reception means (42b) tuned to the transmission frequency or said second electromagnetic signal (b).

8. Electronic unit according to any one of claims 5 to 7, **characterized in that** said comparator means (47) include a hysteresis comparator.

## Patentansprüche

1. System zum Erfassen des Durchgangs von Personen oder Objekten durch einen Eingang/Ausgang (4) in einen bzw. aus einem begrenzten Raum (2), das umfasst:
- eine Erfassungsvorrichtung, die dem begrenzten Raum (2) zugeordnet ist und Sendemittel (8) enthält, um ein erstes und ein zweites elektromagnetisches Signal (a, b), die verschieden sind, in einen ersten bzw, einen zweiten Kommunikationsbereich (A, B) zu senden, die räumlich voneinander getrennt sind und sich teilweise überdecken, wobei dieser erste und dieser zweite Bereich (A, B) jeweils durch eine Eingangs/Ausgangszone (32), die durch den Eingang/Ausgang (4) definiert ist, verlaufen;
- tragbare elektronische Einheiten (40), mit denen die Personen oder Objekte auszurüsten sind und die Mittel (41, 42; 41, 42a, 42b) zum Empfangen des ersten und des zweiten elektromagnetischen Signals (a, b), die von den Sendemitteln (8) gesendet werden, enthalten; und
- Mittel zum Erfassen der Durchgangsrichtung durch den Eingang/Ausgang (4, 5) einer Person oder eines Objekts, die bzw. das mit einer der tragbaren elektronischen Einheiten (40) ausgerüstet ist, in Abhangigkeit vom Empfang des ersten und des zweiten elektromagnetischen Signals,
**dadurch gekennzeichnet, dass** jede tragbare elektronische Einheit umfasst:
- Amplitudenmessmittel, die ermöglichen, die Amplitude (RSSI; RSSI_a, RSSI_b), mit der das erste und das zweite elektromagnetische Signal (a, b) von dieser tragbaren elektronischen Einheit empfangen wird, zu bestimmen; und
- Komparatormittel (47), die ermöglichen, die Empfangsamplitude des ersten elektromagnetischen Signals (a) mit der Empfangsamplitude des zweiten elektromagnetischen Signals (b) zu vergleichen, um so zu bestimmen, welches dieser zwei Signale die größere Amplitude besitzt.

2. System nach Anspruch 1, **dadurch gekennzeichnet, dass** das erste und das zweite elektromagnetische Signal (a, b) mit derselben Frequenz gesendet werden und zeitlich multiplexiert sind, wobei die Amplitudenmessmittel außerdem Mittel (45, 46) umfassen, die ermöglichen, die Messung der Empfangsamplitude des ersten elektromagnetischen Signals (a) bzw, des zweiten elektromagnetischen Signals (b) während der Messung der Amplitude des zweiten elektromagnetischen Signals (b) bzw. des ersten elektromagnetischen Signals (a) beizubehalten.

3. System nach Anspruch 1, **dadurch gekennzeichnet, dass** das erste und das zweite elektromagnetische Signal (a, b) gleichzeitig mit verschiedenen Frequenzen gesendet werden, wobei jede tragbare elektronische Einheit (40) erste Empfangsmittel (42a), die auf die Sendefrequenz des ersten elektromagnetischen Signals (a) abgestimmt sind, und zweite Empfangsmittel (42b), die auf die Sendefrequenz des zweiten elektromagnetischen Signals (b) abgestimmt sind, umfasst.

4. System nach einem der Ansprüche 1 bis 3, **dadurch gekennzeichnet, dass** die Komparatormittel (47) einen Hysterese-Komparator enthalten.

5. Tragbare elektronische Einheit, insbesondere in Form einer Karte, mit der eine Person oder ein Objekt ausgerüstet werden soll und die die Erfassung des Durchgangs dieser Person oder dieses Objekts durch einen Eingang/Ausgang (4) in einen bzw. aus einem begrenzten Raum (2) ermöglichen soll, wobei diese tragbare elektronische Einheit Mittel (41, 42; 41, 42a, 42b) zum Empfangen eines ersten und eines zweiten elektromagnetischen Signals (a, b), die in einen ersten bzw. zweiten Kommunikationsbereich (A, B) gesendet werden, die räumlich voneinander getrennt sind und sich teilweise überdecken, umfasst, wobei dieser erste und dieser zweite Bereich (A, B) jeweils durch eine Eingangs/Ausgangszone (32) verlaufen, die durch den Eingang/Ausgang (4) definiert ist,
**dadurch gekennzeichnet, dass** die tragbare elektronische Einheit außerdem umfasst:
- Amplitudenmessmittel, die ermöglichen, die Amplitude (RSSI; RSSI_a, RSSI_b), mit der das erste und das zweite elektromagnetische Signal (a, b) von dieser tragbaren elektronischen Einheit empfangen werden, zu bestimmen; und
- Komparatormittel (47), die ermöglichen, die Empfangsamplitude des ersten elektromagnetischen Signals (a) mit der Empfangsamplitude des zweiten elektromagnetischen Signals (b) zu vergleichen, derart, dass bestimmt wird, welches dieser zwei Signale die größere Amplitude besitzt.

6. Elektronische Einheit nach Anspruch 5, **dadurch gekennzeichnet, dass** das erste und das zweite elektromagnetische Signal (a, b) mit derselben Frequenz ausgesendet und zeitlich multiplexiert werden, wobei die Amplitudenmessmittel außerdem Mittel (45, 46) umfassen, die ermöglichen, die Messung der Empfangsamplitude des ersten elektromagnetischen Signals (a) bzw. des zweiten elektromagnetischen Signals (b) während der Messung der Amplitude des zweiten elektromagnetischen Signals (b) bzw. des ersten elektromagnetischen Signals (a) beizubehalten.

7. Elektronische Einheit nach Anspruch 5, **dadurch gekennzeichnet, dass** das erste und das zweite elektromagnetische Signal (a, b) gleichzeitig mit verschiedenen Frequenzen gesendet werden, wobei jede tragbare elektronische Einheit (40) erste Empfangsmittel (42a), die auf die Sendefrequenz des ersten elektromagnetischen Signals (a) abgestimmt sind, und zweite Empfangsmittel (42b), die auf die Sendefrequenz des zweiten elektromagnetischen Signals (b) abgestimmt sind, umfasst.

8. Elektronische Einheit nach einem der Ansprüche 5 bis 7, **dadurch gekennzeichnet, dass** die Komparatormittel (47) einen Hysterese-Komparator umfassen.
